# EUROPEAN PATENT APPLICATION

(11) **EP 2 876 092 A1**
(43) Date of publication of application: **27.05.2015**
(21) Application number: 13819561.5
(22) Date of filing: 17.07.2013
(51) Int. Cl.: C03C 3/083, C03C 3/085, C03C 3/091, C03C 21/00

(54) **GLASS FOR PHARMACEUTICAL PRODUCT CONTAINER, PHARMACEUTICAL PRODUCT CONTAINER GLASS TUBE USING SAME, METHOD FOR MANUFACTURING PHARMACEUTICAL PRODUCT CONTAINER, AND PHARMACEUTICAL PRODUCT CONTAINER**

(30) Priority: 18.07.2012 JP 2012159192
(71) Applicant: Nippon Electric Glass Co., Ltd., Otsu-shi Shiga 520-8639 (JP)
(72) Inventor: CHOJU Ken, Otsu-shi Shiga 520-8639 (JP); KAWAMOTO Kosuke, Otsu-shi Shiga 520-8639 (JP); YAMAMOTO Kazuyuki, Otsu-shi Shiga 520-8639 (JP); MURATA Takashi, Otsu-shi Shiga 520-8639 (JP)
(74) Representative: Henkel, Breuer & Partner
(86) International application number: PCT/JP2013/069358
(87) International publication number: WO 2014/014003

(57) **Abstract**

Provided is a glass for a pharmaceutical product container, a pharmaceutical product container glass tube using the same, etc., whereby the container can be adequately chemically strengthened after a final product such as an ampoule, a vial, a pre-filled syringe, or a cartridge has been molded. This glass for a pharmaceutical product container contains, by mol%, 50-80% SiO₂, 5-30% Al₂O₃, 0-2% Li₂O, and 5-25% Na₂O.

## Description

### TECHNICAL FIELD

The present invention relates to a glass for use in producing pharmaceutical containers capable of being chemically strengthened, a glass tube, a method for producing a pharmaceutical container therefrom, and a pharmaceutical container.

### BACKGROUND ART

Various glasses have conventionally been used as materials for containers to pack and store pharmaceuticals therein. Pharmaceuticals are roughly divided into peroral preparations and injection preparations, and the kinds of glass to be used for containers for packing these pharmaceuticals therein are selected in accordance with the division.

The peroral preparations include liquid preparations represented by drink remedies and solid preparations represented by cold remedies and gastrointenstinal drugs. In the case of peroral preparations, inexpensive soda glasses are used because the ability to block the drug from the moisture and oxygen contained in the air or from ultraviolet light suffices.

Meanwhile, the injection preparations are required to satisfy exceedingly severe quality requirements since these preparations are administered directly to the blood vessel. With respect to products into which injection preparations are packed, there are types including ampoule, vial, pre-filled syringe, and cartridge. These containers are produced from glass tubes made of a borosilicate glass. Borosilicate glasses are a material which is easy to process and is less apt to release alkali components that may affect the packed drug. (For example, patent document 1)

Furthermore, a glass for pharmaceutical containers which contains no boric acid and has excellent chemical durability (for example, patent document 2) and a glass for pharmaceutical containers which can be chemically strengthened (for example, patent document 3) have been developed recently.

### CITED REFERENCES

### PATENT REFERENCES

Patent Reference 1: JP-A-H7-206472
Patent Reference 2: JP-A-2011-093792
Patent Reference 3: WO 2013-063238

### DISCLOSURE OF THE INVENTION

### PROBLEMS TO BE SOLVED BY THE INVENTION

In recent years, the drugs to be packed into these containers are being changed with the progress of pharmaceutics and medical science. Conventionally, relatively inexpensive drugs, such as blood coagulants and anesthetic drugs, have been the main products. Recently, however, there increasingly are cases where drugs which are highly expensive as compared with conventional medicines are packed, the drugs including preventive drugs, such as influenza vaccines, and carcinostatic agents.

In case where containers into which such expensive drugs have been packed break in the production step in the drug manufacturer or during clinical activities, an exceedingly large loss results. In case where the glass breakage occurs in the pharmaceutical packing step in the drug manufacturer, not only the loss of the drug itself which is high in unit price is large, but also the production loss due to the resultant stop of the production line poses a serious problem. In addition, the glass breakage incurs a risk concerning safety.

There also is an administration device called a self-injector, with which a patient by himself administers an injection preparation in place of administration by medical personnel. Glass breakage in such a use environment is more serious.

In general, glasses have exceedingly high initial strength, but formation of scratches therein considerably lowers the strength. Because of this, the actual strength of glasses is not so high and is known to depend on the depth of the scratches. The scratches present in containers such as ampoules, vials, pre-filled syringes, and cartridges were formed in various stages including container processing, inspection, transportation, and drug packing, and are a cause of a decrease in the strength of the final products.

For maintaining the strength of containers such as ampoules, vials, pre-filled syringes, and cartridges, chemical strengthening is effective. Chemical strengthening is a technique in which ion exchange is conducted between a substance having a small ionic radius and a substance having a large ionic radius to form a large compression layer in the glass surface and thereby improve the strength of the glass. In a specific treatment method for chemical strengthening, a pharmaceutical container which has been formed into a given shape is immersed in KNO₃ molten salt kept in a 300-500°C high-temperature state to thereby conduct the strengthening.

However, the containers made of conventional borosilicate glasses have had a problem that not only the compression stress layer formed in the surface by chemical strengthening has a small value of compression stress but also the compression stress layer which undergoes ion exchange is thin. Meanwhile, the glass described in patent document 3 has a drawback that the viscosity thereof is high.

A technical subject for the present invention is to propose: a glass for pharmaceutical containers which, after formed into final products such as ampoules, vials, pre-filled syringes, and cartridges, renders the containers capable of being sufficiently chemically strengthened; and a glass tube formed therefrom.

### MEANS FOR SOLVING THE PROBLEMS

The present inventors made various investigations and, as a result, have found that the technical subject can be accomplished by strictly regulating a glass composition and proposes the finding as the present invention.

Namely, the glass for pharmaceutical containers of the present invention is characterized by having a glass composition including, in terms of mol%, 50-80% of SiO₂, 5-30% of Al₂O₃, 0-2% of Li₂O, and 5-25% of Na₂O.

It is preferable that the glass for pharmaceutical containers of the present invention should have a glass composition including, in terms of mol%, 50-80% of SiO₂, 5-30% of Al₂O₃, 0-2% of Li₂O, 5-25% of Na₂O, 0-10% of MgO, and 0-10% of CaO.

It is also preferable that the glass for pharmaceutical containers of the present invention should have a glass composition including, in terms of mol%, 50-80% of SiO₂, 5-30% of Al₂O₃, 0-2% of Li₂O, 5-25% of Na₂O, 0-10% of MgO, 0-10% of CaO, and 1-10% of B₂O₃.

It is also preferable that the glass for pharmaceutical containers of the present invention, when subjected to an ion-exchange treatment in 440°C KNO₃ molten salt, should form a compression stress layer that has a value of compression stress of 300 MPa or higher and a thickness of 10 µm or larger.

It is also preferable that the glass for pharmaceutical containers of the present invention should have a liquidus viscosity of 10⁴ dPa·s or higher. The term "liquidus viscosity" herein means the viscosity measured at the liquidus temperature by the platinum ball pulling-up method.

It is also preferable that the glass for pharmaceutical containers of the present invention should have a coefficient of thermal expansion of 100× 10⁻⁷ /°C or less in the temperature range of 30-380°C. The expression "coefficient of thermal expansion in the temperature range of 30-380°C" herein means a value of the average coefficient of thermal expansion determined using a dilatometer.

The glass tube for pharmaceutical containers of the present invention is characterized by being formed from the glass.

It is preferable that the glass tube for pharmaceutical containers of the present invention should have been formed by the Danner method. The "Danner method" is a forming method in which a molten glass is wound around the surface of a rotating cylindrical refractory and simultaneously made to flow toward the tip of the refractory and the glass of a tubular shape is drawn off from the refractory tip while blowing air.

It is preferable that the glass tube for pharmaceutical containers of the present invention should have an outer diameter of 5-50 mm and a thickness of 0.3-2 mm.

The method of the present invention for producing a pharmaceutical container includes a step in which the glass tube for pharmaceutical containers is processed into a pharmaceutical container having a desired shape and a step in which the pharmaceutical container obtained by processing in the step is subjected to a strengthening treatment.

The pharmaceutical container of the present invention is produced by the production method.

### EFFECT OF THE INVENTION

The glass for pharmaceutical containers of the present invention is a glass which is suitable for chemical strengthening. Because of this, by subjecting pharmaceutical containers produced from the glass of the present invention to chemical strengthening, the mechanical strength of the containers can be greatly improved and container breakage can be highly effectively prevented from occurring in pharmaceutical packing steps or clinical activities or when the patient himself administers the pharmaceutical.

### EMBODIMENTS FOR CARRYING OUT THE INVENTION

The glass for pharmaceutical containers of the present invention, when subjected to a chemical strengthening treatment, can form in the surface thereof a compression stress layer which has a large value of stress and a large thickness. Methods for forming a compression stress layer in the surface include a physical strengthening method and a chemical strengthening method. In the present invention, it is preferred to strengthen the glass by a chemical strengthening method.

The chemical strengthening method is a method in which a glass is subjected to an ion-exchange treatment at a temperature not higher than the strain point of the glass to thereby introduce alkali ions having a large ionic radius into the glass surface. So long as the chemical strengthening method is used for forming a compression stress layer, it is possible to properly form a compression stress layer even in the case where the glass has a small thickness.

The reasons for specifying the content of each component to the range shown above, in the glass for pharmaceutical containers of the present invention, are shown below. Incidentally, in the explanation of the range of the content of each component, "%" means mol% unless otherwise indicated, and each numerical range expressed with "-" means the range in which the numerals respectively preceding and succeeding the "-" are included as a lower limit and an upper limit.

SiO₂ is a component which forms the network of the glass. In case where the content of SiO₂ is too low, vitrification is difficult to occur, and also the coefficient of thermal expansion becomes too high, whereby thermal shock resistance is likely to decrease. In addition, acid resistance of the glass tends to be deteriorated. Meanwhile, in case where the content of SiO₂ is too high, meltability and formability are likely to decrease. Consequently, the content of SiO₂ is 50-80%, preferably 55-77%, 60-75%, and 62-75%.

Al₂O₃ is a component which enhances the ion-exchange performance and is a component which heightens the strain point and Young's modulus. In case where the content of Al₂O₃ is too low, there is a possibility that the ion-exchange performance cannot be sufficiently exhibited. Meanwhile, in case where the content of Al₂O₃ is too high, the glass has an increased viscosity and, as a result, the meltability and formability are likely to decrease. Furthermore, there is a possibility that the acid resistance might decrease, resulting in a possibility that the quality of the pharmaceutical packed in the glass might be deteriorated. Consequently, the content of Al₂O₃ is 5-30%, preferably 5.0-25%, 5.0-20%, 5.0-15%, and 7-13%.

Li₂O is an ion-exchange component and is a component which lowers the high-temperature viscosity to heighten the meltability and formability. Furthermore, Li₂O is highly effective, among alkali metal oxides, in increasing the value of compression stress. However, in case where the content of Li₂O in the glass system containing 7% or more of Na₂O is exceedingly high, there is a tendency that the value of compression stress decreases rather than increases. Also in case where the content of Li₂O is too high, liquidus viscosity decreases and the glass is likely to devitrify. In addition, the coefficient of thermal expansion becomes too high, thermal shock resistance decreases, and a crack is likely to occur during forming. Moreover, there are cases where the low-temperature viscosity becomes too low, the stress relaxation is likely to occur, resulting in a decrease, rather than an increase, in compression stress value. Consequently, the content of Li₂O is 0-2%, preferably 0-1.7%, 0-1.5%, 4-1%, 0 to less than 1.0%, 0-0.5%, in particular, 0-0.3%.

Na₂O is an ion-exchange component and is a component which lowers the high-temperature viscosity to heighten the meltability and formability. Furthermore, Na₂O is a component for regulating the coefficient of thermal expansion of the glass. In case where the content of Na₂O is too low, this glass is prone to have reduced meltability, a reduced coefficient of thermal expansion, or reduced ion-exchange performance. Meanwhile, in case where the content of Na₂O is too high, this glass has too high a coefficient of thermal expansion and reduced thermal shock resistance and is prone to crack during forming. In addition, there are cases where this glass has an excessively lowered strain point or the glass composition tends to have an impaired balance among the components, resulting in reduced, rather than increased, devitrification resistance. Consequently, the content of Na₂O is 5-25%, preferably 5-20%, 7-20%, 7-16%, and 9-16%.

Besides the components shown above, the following components may, for example, be contained.

B₂O₃ is a component which forms the network of the glass. B₂O₃ is also a component which lowers the high-temperature viscosity and density and which stabilizes the glass to inhibit crystal precipitation and lower the liquidus temperature. In addition, B₂O₃ is a component which enhances the crack resistance and heighten the scratch resistance. In case where the content of B₂O₃ is too high, there are cases where ion exchange results in glass-surface coloration called scorching or in a decrease in water resistance or is likely to yield a compression stress layer having a small thickness. There also are cases where this glass shows a larger viscosity change with changing temperature and is difficult to form. Consequently, the content of B₂O₃ is preferably 0-10%, more preferably 0.1-10%, 1-10%, 1.5-9%, 2-8%, and 2-7%.

As stated above, Al₂O₃ and B₂O₃ are components which change the meltability or formability of the glass and the ion-exchange performance thereof in opposite directions. Because of this, each property is not determined by the content of each component alone, and a glass having high ion-exchange performance while retaining meltability and formability can be obtained by controlling a balance between the contents of both.

K₂O is a component which accelerates ion exchange, and is a component which, among alkali metal oxides, is apt to increase the thickness of the compression stress layer. K₂O is a component which lowers the high-temperature viscosity to heighten the meltability and formability. Furthermore, K₂O is also a component which improves the devitrification resistance. However, in case where the content of K₂O is too high, there are cases where the coefficient of thermal expansion becomes too high, thermal shock resistance decreases, and a crack is likely to occur during forming. In addition, the strain point tends to be excessively lowered or the glass composition tends to have an impaired balance among the components, resulting in a decrease, rather than an increase, in devitrification resistance. Furthermore, this glass tends to be unable to be sufficiently chemically strengthened. Consequently, the content of K₂O is preferably 10% or less, more preferably 9% or less, 8% or less, 7% or less, 6% or less, in particular, 5% or less. In the case of adding K₂O, a suitable addition amount is 0.1% or larger, 0.5% or larger, 1% or larger, 1.5% or larger, in particular, 2% or larger. In the case where addition of K₂O is avoided as much as possible, it is preferable that the content thereof should be 0-1.9%, 0-1.35%, 0-1%, 0 to less than 1.0%, in particular, 0-0.05%.

In case where the content of Li₂O+Na₂O+K₂O is too low, there are cases where the ion-exchange performance or meltability is likely to decrease. Meanwhile, in case where the content of Li₂O+Na₂O+K₂O is too high, the coefficient of thermal expansion becomes too high, the thermal shock resistance decreases, and a crack is likely to occur during forming. In addition, the strain point tends to be excessively lowered or the glass composition tends to have an impaired balance among the components, resulting in a decrease, rather than an increase, in devitrification resistance. Consequently, the content of Li₂O+Na₂O+K₂O is preferably 5-30%, more preferably 5-25%, 6-20%, 8-19%, 9-18.5%, 9-17%, 9-16%, and especially preferably 9-15.5%.

MgO is a component which lowers the high-temperature viscosity to heighten meltability and formability, and is a component which, among the oxides of alkaline earth metals, is highly effective in heightening the ion-exchange performance. In addition, MgO is a component for regulating the coefficient of thermal expansion of the glass. However, in case where the content of MgO is too high, the density or coefficient of thermal expansion easily becomes high and the glass is likely to devitrify. Furthermore, this glass, when chemically strengthened, tends to have low compression stress and a reduced strengthening depth. Consequently, the content of MgO is preferably 0-10%, more preferably 0-9%, 0-8%, 0-7%, 0-6%, or 0-5%.

CaO is a component which, as compared with other components, lowers the high-temperature viscosity, without reducing the devitrification resistance, and thereby heightens the meltability and formability. In addition, CaO is a component which is highly effective in heightening the ion-exchange performance. In case where the content of CaO is too high, the density or coefficient of thermal expansion becomes high and the glass composition tends to have an impaired balance among the components. This glass hence tends to be more, rather than less, likely to devitrify and tends to have reduced ion-exchange performance and be likely to deteriorate the ion-exchange solution. Consequently, the content of CaO is preferably 0-10%, more preferably 0-8%, 0-7%, 0-6%, 0-5%, 0-4%, 0-3%, in particular, 0-2%.

SrO is a component which lowers the high-temperature viscosity to heighten the meltability and formability and which lowers the liquidus temperature. However, in case where the content thereof is too high, there are cases where not only the ion-exchange reaction is likely to be inhibited but also the density or coefficient of thermal expansion becomes high and the glass is likely to devitrify. Consequently, the content of SrO is preferably 0-5%, more preferably 0-3%, 0-2%, and 0-1%.

BaO is a component which lowers the high-temperature viscosity to heighten the meltability and formability and which lowers the liquidus temperature. However, in case where the content of BaO is too high, not only the ion-exchange reaction is likely to be inhibited but also the glass density or coefficient of thermal expansion becomes high and the glass is likely to devitrify. Consequently, the content of BaO is preferably 0-5%, more preferably 0-3%, 0-2%, and 0-1%.

In case where the content of MgO+CaO+SrO+BaO is too high, the glass tends to have a high density or coefficient of thermal expansion, or to devitrify, or to have reduced ion-exchange performance. Consequently, the content of MgO+CaO+SrO+BaO is preferably 0-10%, more preferably 0-8%, 0-7%, and 0-6%.

TiO₂ is a component which heightens the ion-exchange performance and serves to protect the packed pharmaceutical against ultraviolet light, and is a component which lowers the high-temperature viscosity. However, in case where the content thereof is too high, there are cases where this glass is likely to have a color or devitrify. Consequently, the content of TiO₂ is preferably 0-2%, more preferably 0-1%, 0-0.5%, 0-0.3%, 0-0.1%, 0-0.05%, in particular, 0-0.01%.

ZrO₂ is a component which remarkably heightens the ion-exchange performance, and is also a component which enhances the viscosity characteristics around liquidus viscosity and heightens the strain point. However, in case where the content of ZrO₂ is too high, there are cases where the devitrification resistance and crack resistance are considerably reduced. There also are cases where the density becomes too high. Furthermore, this glass, when chemically strengthened, tends to have low compression stress and a reduced strengthening depth. Consequently, the content of ZrO₂ is preferably 0.001-5%, more preferably 0.001-3%, 0.001-2%, 0.001-1%, and 0.001-0.5%.

ZnO is a component which heightens the ion-exchange performance, and is a component which is highly effective especially in heightening the value of compression stress. ZnO is also a component which lowers the high-temperature viscosity without lowering the low-temperature viscosity. However, in case where the content of ZnO is too high, this glass tends to suffer phase separation, or to have reduced devitrification resistance or too high a density, or to form a compression stress layer having a reduced thickness. Consequently, the content of ZnO is preferably 0-6%, more preferably 0-5%, 0-3%, and 0-1%.

P₂O₅ is a component which heightens the ion-exchange performance, and is a component which especially increases the thickness of the compression stress layer. However, in case where the content of P₂O₅ is too high, there are cases where this glass is likely to suffer phase separation or have reduced water resistance. Consequently, the content of P₂O₅ is preferably 0-10%, more preferably 0-3%, 0-1%, 0-0.5%, and 0-0.1%.

As a fining agent, one or more members selected from the group consisting of As₂O₃, Sb₂O₃, F, Cl, SO₃, and CeO₂ (preferably, the group consisting of Cl and SO₃) may be added in an amount of 0-3%. Incidentally, Cl is a component which improves foam removal during glass production. In case where the content of Cl is high, there are cases where the Cl which has vaporized during glass production reacts with moisture to corrode the metals of the production equipment. Consequently, the content of Cl is preferably 0-1%, more preferably 0-0.5%, 0-0.3%, in particular, 0.01-0.3%.

SnO₂ is a component which serves as a fining agent and is a component which heightens the ion-exchange performance. However, in case where SnO₂ is contained in too large an amount, there are cases where the Sn is reduced during processing of this glass and precipitates as colloid, rendering the glass brown. Consequently, it is preferable that the content of SnO₂ should be 0-3%, 0.01-3%, 0.05-3%, 0.1-3%, in particular, 0.2-3%. In the case of using SnO₂ as a fining agent, the content thereof is preferably 0.1-1%, more preferably 0.1-0.5%, and 0.1-0.3%.

Fe₂O₃ is a component which comes into the glass from raw materials for glass or during steps. Fe₂O₃, when appropriately used in combination with TiO₂, serves to protect the drug packed in the container from ultraviolet light. However, in case where the content of Fe₂O₃ is too high, there are cases where this glass has a color. Consequently, the content of Fe₂O₃ is preferably 0.001-0.5%, more preferably 0.001-0.2%, 0.001-0.1%, and 0.001-0.05%.

It is preferable that the glass for pharmaceutical containers of the present invention should have, for example, the following properties.

It is preferable that when the glass for pharmaceutical containers of the present invention is subjected to an ion-exchange treatment in 430°C KNO₃ molten salt, the surface compression stress layer should have a value of compression stress of 300 MPa or higher and a thickness of 10 µm or larger. It is more preferable that the value of surface compression stress should be 500 MPa or higher and the thickness of the compression stress layer should be 30 µm or larger. It is especially preferable that the value of surface compression stress should be 700 MPa or higher and the thickness of the compression stress layer should be 30 µm or larger.

In the glass for pharmaceutical containers of the present invention, the coefficient of thermal expansion thereof in the temperature range of 30-380°C is preferably 100×10⁻⁷ /°C or less, and it is especially desirable that the coefficient of thermal expansion thereof should be 50×10⁻⁷ to 100×10⁻⁷ /°C, 55×10⁻⁷ to 95×10⁻⁷ /°C, and 60×10⁻⁷ to 90×10⁻⁷ /°C. By regulating the coefficient of thermal expansion thereof so as to be within that range, the glass is rendered less apt to be broken by thermal shock and, hence, the time period required for preheating before the strengthening treatment or for annealing after the strengthening treatment can be shortened. As a result, the cost of glass production can be reduced. In case where the coefficient of thermal expansion thereof is too low, this glass tends to have an increased viscosity and there are cases where the glass has an elevated melting temperature or forming temperature, rendering the glass production difficult. Meanwhile, in case where the coefficient of thermal expansion thereof is too high, there is a heightened possibility that breakage due to thermal shock might occur in various heat treatment steps such as a glass production step, processing step, and sterilization step. Incidentally, increasing the contents of the oxides of alkali metals and the oxides of alkaline earth metals in the glass composition is apt to result in an increase in the coefficient of thermal expansion, whereas reducing the contents of the oxides of alkali metals and the oxides of alkaline earth metals therein is apt to result in a decrease in the coefficient of thermal expansion.

In the glass for pharmaceutical containers of the present invention, it is preferable that the liquidus viscosity thereof should be 10^{4.0} dPa·s or higher, and it is especially desirable that the liquidus viscosity thereof should be 10^{4.4} dPa·s or higher, 10^{4.5} dPa·s or higher, 10^{4.8} dPa·s or higher, and 10^{5.0} dPa·s or higher. Incidentally, the higher the liquidus viscosity, the more the devitrification resistance and the formability improve. So long as the liquidus viscosity thereof is 10^{4.5} dPa·s or higher, glass tube production by the Danner method is easy and it is possible to supply a large quantity of glass tubes at low cost. The liquidus viscosity thereof can be heightened by increasing the contents of Na₂O and K₂O in the glass composition or suitably regulating the contents of Al₂O₃, Li₂O, MgO, ZnO, TiO₂, and ZrO₂.

In the glass for pharmaceutical containers of the present invention, it is preferable that the crack resistance thereof before a strengthening treatment should be 100 gf or higher, 200 gf or higher, 300 gf or higher, 400 gf or higher, in particular, 500 gf or higher. The higher the crack resistance, the less the surface of the glass receives scratches and, hence, the more the glass is prevented from breaking in steps conducted before a strengthening treatment, such as processing into containers, inspection, transportation, and drug packing. Furthermore, the glass after the strengthening is less apt to have a reduced mechanical strength, and has reduced unevenness in mechanical strength.

The glass tube of the present invention for pharmaceutical containers is made of the glass for pharmaceutical containers described above. Consequently, the technical features (composition, properties, etc.) of the glass tube of the present invention are the same as the technical features of the glass for pharmaceutical containers of the present invention. A detailed explanation thereon is hence omitted here.

In the glass tube of the present invention for pharmaceutical containers, it is preferable that the outer diameter dimension thereof should be 5-50 mm, and it is especially preferable that the outer diameter dimension thereof should be 5-40 mm, and 5-30 mm. It is preferable that the thickness dimension thereof should be 0.3-2 mm, and it is especially preferable that the thickness dimension thereof should be 0.3-1.5 mm, and 0.4-1.5 mm.

Next, methods for producing the glass for pharmaceutical containers of the present invention and the glass tube made of the glass are explained. Methods for producing the glass according to the present invention and for producing the glass tube should not be construed as being limited to the following.

First, raw materials for glass which have been mixed together so as to result in the glass composition described above are introduced into a continuous melting furnace, thermally melted at 1,550-1,750°C, and fined. Thereafter, the molten glass is fed to a forming device, formed into a tube, and annealed. Thus, a glass tube can be produced.

With respect to methods for forming the glass, it is preferred to employ the Danner method, which is capable of continuously producing glass tubes in a large quantity at low cost. Besides the Danner method, various forming methods can be employed. For example, forming methods such as a downdraw method, an updraw method, and the Vello method can be employed.

The glass tube of the present invention for pharmaceutical containers can be obtained in such a manner.

Subsequently, a method for strengthening the glass tube for pharmaceutical containers of the present invention (method for producing a pharmaceutical container) is explained. Methods for strengthening the glass tube according to the present invention should not be construed as being limited to the following.

First, the glass tube for pharmaceutical containers of the present invention is processed into a pharmaceutical container having a desired shape.

Thereafter, the pharmaceutical container is subjected to a strengthening treatment.

The strengthening treatment preferably is an ion-exchange treatment (chemical strengthening). Conditions for the ion-exchange treatment are not particularly limited, and optimal conditions may be selected while taking account of the viscosity characteristics, intended use, thickness, internal tensile stress, dimensional change, or the like. of the glass. For example, the ion-exchange treatment can be accomplished by immersing the glass in 400-550°C KNO₃ molten salt for 1-10 hours, preferably 1-8 hours. In particular, a compression stress layer can be efficiently formed in the glass surface by performing ion exchange between K ions in the KNO₃ molten salt and the Na component of the glass.

The pharmaceutical container which has thus undergone a strengthening treatment has a compression stress layer in the surface thereof. It is preferable that the compression stress layer should have a value of compression stress of 300 MPa or higher, 400 MPa or higher, 500 MPa or higher, 600 MPa or higher, in particular, 900-1,500 MPa. The larger the value of compression stress, the higher the mechanical strength. It is also preferable that the thickness of the compression stress layer should be 10 µm or larger, 15 µm or larger, 20 µm to less than 80 µm, in particular, 30 µm to 60 µm. The larger the thickness of the compression stress layer, the less the pharmaceutical container cracks even upon reception of a deep scratch and the lower the unevenness in mechanical strength. Incidentally, the thickness of the compression stress layer can be increased by increasing the contents of K₂O and P₂O₅ in the glass composition or by reducing the contents of SrO and BaO. Furthermore, the thickness of the compression stress layer can be increased by prolonging the period of ion exchange or elevating the temperature of the ion-exchange solution.

### EXAMPLES

The present invention will be explained below on the basis of Examples. The following are mere Examples, and the present invention should not be construed as being limited to the following Examples in any way.

Tables 1 to 7 show Examples according to the present invention (samples Nos. 1 to 34 and 36 to 40). Sample No. 35 indicates a borosilicate glass which has conventionally been used as a glass for pharmaceutical containers.

[Table 1]

**Table 1**

| | | No.1 | No. 2 | No. 3 | No.4 | No. 5 | No. 6 |
|---|---|---|---|---|---|---|---|
| Glass composition (mol%) | SiO₂ | 65.4 | 65.4 | 65.4 | 65.8 | 65.9 | 65.1 |
| | Al₂O₃ | 11.5 | 11.5 | 11.5 | 11.6 | 12.2 | 11.5 |
| | B₂O₃ | 1.6 | 2.8 | 4.1 | 4.7 | 4.1 | 4.1 |
| | Na₂O | 12.8 | 11.8 | 10.7 | 9.7 | 10.7 | 10.7 |
| | K₂O | 2.6 | 2.4 | 2.2 | 2.0 | 2.2 | 2.2 |
| | MgO | 4.8 | 4.8 | 4.8 | 4.9 | 4.8 | 6.3 |
| | CaO | 1.2 | 1.2 | 1.2 | 1.2 | 0.0 | 0.0 |
| | SnO₂ | 0.1 | 0.1 | 0.1 | 0.1 | 0.1 | 0.1 |
| Li₂O+Na₂O+K₂O | | 15.4 | 14.2 | 12.9 | 11.7 | 12.9 | 12.9 |
| MgO+CaO+SrO+BaO | | 6.0 | 6.0 | 6.0 | 6.0 | 4.8 | 6.4 |
| Density (g/cm³) | | 2.45 | 2.44 | 2.43 | 2.41 | 2.41 | 2.42 |
| α(×10⁻⁷) | | 89 | 84 | 79 | 74 | 78 | 78 |
| Ps (°C) | | 568 | 568 | 569 | 572 | 581 | 580 |
| Ta (°C) | | 616 | 616 | 618 | 621 | 634 | 630 |
| Ts (°C) | | 857 | 858.5 | 860 | 865.5 | 892 | 876.5 |
| 10⁴ dPa·s (°C) | | 1248 | 1247 | 1258 | 1262 | 1297 | 1260 |
| 10³ dPa·s (°C) | | 1448 | 1447 | 1460 | 1465 | 1497 | 1460 |
| 10^{2.5} dPa·s (°C) | | 1573 | 1576 | 1588 | 1590 | 1624 | 1587 |
| TL (°C) | | 1021 | 1085 | 1113 | 1144 | unmeasured | unmeasured |
| 10g₁₀η_{TL} (dPa·s) | | 5.7 | 5.1 | 5.0 | 4.8 | unmeasured | unmeasured |
| Crack resistance (gf) | | 500 | 1000 | 900 | 1500 | unmeasured | unmeasured |
| CS (MPa) | | 996 | 970 | 902 | 838 | 930 | 909 |
| DOL (µm) | | 44 | 41 | 40 | 39 | 45 | 41 |

[Table 2]

**Table 2**

| | | No. 7 | No. 8 | No. 9 | No. 10 | No. 11 | No. 12 |
|---|---|---|---|---|---|---|---|
| Glass composition (mol%) | SiO₂ | 65.5 | 65.7 | 64.4 | 65.4 | 66.0 | 66.2 |
| | Al₂O₃ | 11.6 | 11.6 | 12.3 | 12.3 | 10.9 | 11.5 |
| | B₂O₃ | 4.1 | 4.1 | 4.2 | 3.2 | 4.1 | 3.2 |
| | Na₂O | 11.7 | 10.8 | 10.8 | 10.8 | 10.7 | 10.8 |
| | K₂O | 2.2 | 2.9 | 2.2 | 2.2 | 2.2 | 2.2 |
| | MgO | 4.8 | 4.8 | 4.8 | 4.8 | 4.8 | 4.8 |
| | CaO | 0.0 | 0.0 | 1.2 | 1.2 | 1.2 | 1.2 |
| | SnO₂ | 0.1 | 0.1 | 0.1 | 0.1 | 0.1 | 0.1 |
| Li₂O+Na₂O+K₂O | | 13.9 | 13.7 | 13.0 | 13.0 | 12.9 | 13.0 |
| MgO+CaO+SrO+BaO | | 4.8 | 4.8 | 6.0 | 6.0 | 6.0 | 6.0 |
| Density (g/cm³) | | 2.42 | 2.42 | 2.43 | 2.43 | 2.43 | 2.43 |
| α(×10⁻⁷) | | 82 | 82 | 78 | 79 | 79 | 79 |
| Ps (°C) | | 564 | 569 | 573 | 581 | 560 | 576 |
| Ta (°C) | | 612 | 619 | 623 | 632 | 607 | 626 |
| Ts (°C) | | 858 | 870.5 | 871 | 884 | 847.5 | 876 |
| 10⁴ dPa·s (°C) | | 1261 | 1280 | 1260 | 1280 | 1247 | 1277 |
| 10³ dPa·s (°C) | | 1468 | 1488 | 1460 | 1480 | 1455 | 1480 |
| 10^{2.5} dPa·s (°C) | | 1595 | 1613 | 1587 | 1604 | 1586 | 1606 |
| TL (°C) | | 1127 | 1151 | 1182 | 1157 | 1145 | 1134 |
| log₁₀η_{TL} (dPa·s) | | 4.9 | 4.8 | 4.5 | 4.8 | 4.6 | 4.9 |
| Crack resistance (gf) | | unmeasured | unmeasured | unmeasured | unmeasured | unmeasured | unmeasured |
| CS (MPa) | | 928 | 869 | 909 | 919 | 860 | 895 |
| DOL (µm) | | 42 | 47 | 41 | 43 | 39 | 42 |

[Table 3]

**Table 3**

| | | No. 13 | No. 14 | No. 15 | No. 16 | No. 17 | No. 18 |
|---|---|---|---|---|---|---|---|
| Glass composition (mol%) | SiO₂ | 65.2 | 64.2 | 64.9 | 65.0 | 66.1 | 68.9 |
| | Al₂O₃ | 10.9 | 11.6 | 11.4 | 11.4 | 11.6 | 9.4 |
| | MgO | 4.8 | 4.8 | 4.7 | 4.8 | 0.0 | 4.8 |
| | CaO | 1.2 | 1.2 | 0.0 | 0.0 | 0.0 | 0.0 |
| | B₂O₃ | 5.1 | 5.1 | 4.1 | 6.9 | 7.0 | 3.7 |
| | Na₂O | 10.6 | 10.8 | 14.8 | 11.8 | 15.2 | 12.4 |
| | K₂O | 2.1 | 2.2 | 0.0 | 0.0 | 0.0 | 0.7 |
| | SnO₂ | 0.1 | 0.1 | 0.1 | 0.1 | 0.1 | 0.1 |
| Li₂O+Na₂O+K₂O | | 12.7 | 13.0 | 14.8 | 11.8 | 15.2 | 13.1 |
| MgO+CaO+SrO+BaO | | 6.0 | 6.0 | 4.8 | 4.8 | 0.0 | 4.8 |
| Density (g/cm³) | | 2.42 | 2.42 | 2.43 | 2.39 | 2.41 | 2.41 |
| α(×10⁻⁷) | | 78 | 79 | 92 | 69 | 80 | 78 |
| Ps (°C) | | 555 | 559 | 560 | 563 | 545 | 558 |
| Ta (°C) | | 601 | 606 | 607 | 612 | 587 | 605 |
| Ts (°C) | | 835 | 841.5 | 836 | 853.5 | 789 | 843 |
| 10⁴ dPa·s (°C) | | 1230 | 1239 | 1227 | 1262 | 1190 | 1240 |
| 10³ dPa·s (°C) | | 1435 | 1440 | 1431 | 1468 | 1428 | 1453 |
| 10^{2.5} dPa·s (°C) | | 1565 | 1568 | 1557 | 1583 | 1575 | 1585 |
| TL (°C) | | 1116 | 1141 | 1053 | 1134 | <893 | 1044 |
| log₁₀η_{TL} (dPa·s) | | 4.7 | 4.6 | 5.2 | 4.8 | >6.2 | 5.4 |
| Crack resistance (gf) | | unmeasured | unmeasured | unmeasured | unmeasured | unmeasured | unmeasured |
| CS (MPa) | | 843 | 861 | 977 | 876 | 828 | 848 |
| DOL (µm) | | 36 | 38 | 34 | 31 | 34 | 36 |

[Table 4]

**Table 4**

| | | No. 19 | No. 20 | No. 21 | No. 22 | No. 23 | No. 24 |
|---|---|---|---|---|---|---|---|
| Glass composition (mol%) | SiO₂ | 69.4 | 70.4 | 70.9 | 71.9 | 72.5 | 67.0 |
| | Al₂O₃ | 9.5 | 8.1 | 8.2 | 6.8 | 6.9 | 9.5 |
| | B₂O₃ | 3.7 | 3.7 | 3.7 | 3.6 | 3.6 | 6.5 |
| | Na₂O | 10.4 | 12.3 | 10.3 | 12.2 | 10.2 | 11.4 |
| | K₂O | 2.1 | 0.7 | 2.0 | 0.7 | 2.0 | 0.7 |
| | MgO | 4.8 | 4.7 | 4.8 | 4.7 | 4.7 | 4.8 |
| | CaO | 0.0 | 0.0 | 0.0 | 0.0 | 0.0 | 0.0 |
| | SnO₂ | 0.1 | 0.1 | 0.1 | 0.1 | 0.1 | 0.1 |
| Li₂O+Na₂O+K₂O | | 12.5 | 13.0 | 12.3 | 12.9 | 12.2 | 12.1 |
| MgO+CaO+SrO+BaO | | 4.8 | 4.7 | 4.8 | 4.7 | 4.7 | 4.8 |
| Density (g/cm³) | | 2.40 | 2.41 | 2.40 | 2.41 | 2.40 | 2.40 |
| α(×10⁻⁷) | | 78 | 77 | 78 | 76 | 76 | 73 |
| Ps (°C) | | 559 | 551 | 554 | 547 | 548 | 550 |
| Ta (°C) | | 608 | 596 | 601 | 591 | 594 | 595 |
| Ts (°C) | | 859 | 823 | 843 | 808 | 826 | 824 |
| 10⁴ dPa·s (°C) | | 1274 | 1230 | 1261 | 1209 | 1225 | 1211 |
| 10³ dPa·s (°C) | | 1488 | unmeasured | 1486 | 1429 | 1445 | 1423 |
| 10^{2.5} dPa·s (°C) | | 1631 | unmeasured | 1622 | 1573 | 1585 | 1556 |
| TL (°C) | | 1074 | 943 | 971 | 959 | 968 | 1056 |
| log₁₀η_{TL} (dPa·s) | | 5.3 | 6.1 | 6.1 | 5.8 | 5.9 | 5.1 |
| Crack resistance (gf) | | unmeasured | unmeasured | unmeasured | unmeasured | unmeasured | unmeasured |
| CS (MPa) | | 781 | 786 | 728 | 725 | 682 | 791 |
| DOL (µm) | | 43 | 34 | 40 | 32 | 38 | 29 |

[Table 5]

**Table 5**

| | | No. 25 | No. 26 | No. 27 | No. 28 | No. 29 |
|---|---|---|---|---|---|---|
| Glass composition (mol%) | SiO₂ | 67.6 | 68.6 | 69.1 | 70.1 | 70.6 |
| | Al₂O₃ | 9.5 | 8.1 | 8.2 | 6.8 | 6.9 |
| | B₂O₃ | 6.5 | 6.4 | 6.5 | 6.4 | 6.4 |
| | Na₂O | 9.4 | 11.3 | 9.3 | 11.2 | 9.3 |
| | K₂O | 2.1 | 0.7 | 2.0 | 0.7 | 2.0 |
| | MgO | 4.8 | 4.8 | 4.8 | 4.7 | 4.7 |
| | CaO | 0.0 | 0.0 | 0.0 | 0.0 | 0.0 |
| | SnO₂ | 0.1 | 0.1 | 0.1 | 0.1 | 0.1 |
| Li₂O+Na₂O+K₂O | | 11.5 | 12.0 | 11.3 | 11.9 | 11.3 |
| MgO+CaO+SrO+BaO | | 4.8 | 4.8 | 4.8 | 4.7 | 4.7 |
| Density (g/cm³) | | 2.39 | 2.40 | 2.39 | 2.40 | 2.39 |
| α(×10⁻⁷) | | 73 | 71 | 71 | 71 | 72 |
| Ps (°C) | | 547 | 541 | 541 | 538 | 537 |
| Ta (°C) | | 594 | 584 | 586 | 579 | 580 |
| Ts (°C) | | 835 | 798 | 818 | 786 | 800 |
| 10⁴ dPa·s (°C) | | 1245 | 1189 | 1217 | 1167 | 1216 |
| 10³ dPa·s (°C) | | 1459 | 1407 | 1437 | 1386 | unmeasured |
| 10^{2.5} dPa·s (°C) | | 1592 | 1541 | 1577 | 1526 | unmeasured |
| TL (°C) | | 1131 | 1056 | 1106 | 999 | 1016 |
| log₁₀η_{TL} (dPa·s) | | 4.7 | 4.9 | 4.7 | 5.1 | 5.4 |
| Crack resistance (gf) | | unmeasured | unmeasured | unmeasured | unmeasured | unmeasured |
| CS (MPa) | | 713 | 771 | 672 | 735 | 636 |
| DOL (µm) | | 37 | 27 | 33 | 25 | 31 |

[Table 6]

**Table 6**

| | | No. 30 | No. 31 | No. 32 | No. 33 | No. 34 | No. 35 |
|---|---|---|---|---|---|---|---|
| Glass composition (mol%) | SiO₂ | 73.1 | 73.6 | 62.9 | 74.7 | 68.2 | 76.7 |
| | Al₂O₃ | 6.8 | 6.8 | 13.5 | 6.8 | 10.9 | 4.5 |
| | B₂O₃ | 1.6 | 0.6 | 2.6 | 0.6 | 0.0 | 10.0 |
| | Li₂O | 0.0 | 0.0 | 0.5 | 0.0 | 0.0 | 0.0 |
| | Na₂O | 12.8 | 12.2 | 12.8 | 12.2 | 12.8 | 6.0 |
| | K₂O | 0.7 | 0.7 | 1.6 | 0.7 | 2.0 | 1.3 |
| | MgO | 4.9 | 4.8 | 4.8 | 4.9 | 0.0 | 0.0 |
| | CaO | 0.0 | 1.2 | 1.2 | 0.0 | 1.2 | 0.8 |
| | BaO | 0.0 | 0.0 | 0.0 | 0.0 | 0.0 | 0.5 |
| | SnO₂ | 0.1 | 0.1 | 0.1 | 0.1 | 0.1 | 0.0 |
| | Cl | 0.0 | 0.0 | 0.0 | 0.0 | 0.0 | 0.2 |
| Li₂O+Na₂O+K₂O | | 13.5 | 12.9 | 14.9 | 12.9 | 14.8 | 7.3 |
| MgO+CaO+SrO+BaO | | 4.9 | 6.0 | 6.0 | 4.9 | 1.2 | 1.3 |
| Density (g/cm³) | | unmeasured | unmeasured | unmeasured | unmeasured | unmeasured | unmeasured |
| α(×10⁻⁷) | | 78 | 78 | 85 | 77 | 86 | 50 |
| Ps (°C) | | 565 | 585 | 585 | 585 | 575 | 525 |
| Ta(°C) | | 615 | 630 | 635 | 630 | 630 | 570 |
| Ts (°C) | | 835 | 855 | 875 | 865 | 880 | 785 |
| 10⁴ dPa·s (°C) | | 1235 | 1245 | 1260 | 1270 | 1285 | 1170 |
| 10³ dPa·s (°C) | | 1455 | 1465 | 1560 | 1495 | 1490 | 1415 |
| 10^{2.5} dPa·s (°C) | | 1600 | 1605 | 1580 | 1635 | 1620 | 1620 |
| TL (°C) | | unmeasured | unmeasured | unmeasured | unmeasured | unmeasured | 920 |
| log₁₀η_{TL} (dPa·s) | | unmeasured | unmeasured | unmeasured | unmeasured | unmeasured | 5.9 |
| Crack resistance (gf) | | unmeasured | 900 | unmeasured | 1000 | unmeasured | 600 |
| CS (MPa) | | 750 | 740 | 1100 | 790 | 1045 | 400 |
| DOL (µm) | | 35 | 40 | 40 | 40 | 45 | 15 |

[Table 7]

**Table 7**

| | | No.36 | No. 37 | No. 38 | I No. 39 | No. 40 |
|---|---|---|---|---|---|---|
| Glass composition (mol%) | SiO₂ | 64.4 | 64.7 | 66.5 | 66.7 | 69.5 |
| | Al₂O₃ | 12.3 | 12.9 | 12.1 | 12.3 | 8.7 |
| | B₂O₃ | 4.2 | 4.9 | 2.7 | 2.5 | 3.8 |
| | Na₂O | 10.8 | 15.7 | 15.4 | 14.5 | 12.6 |
| | K₂O | 2.2 | 0.0 | 0.0 | 1.4 | 1.3 |
| | MgO | 4.8 | 1.7 | 3.2 | 2.5 | 4.0 |
| | CaO | 1.2 | 0.0 | 0.0 | 0.0 | 0.0 |
| | SnO₂ | 0.1 | 0.1 | 0.1 | 0.1 | 0.1 |
| Li₂O+Na₂O+K₂O | | 13.0 | 15.7 | 15.4 | 15.9 | 13.9 |
| MgO+CaO+SrO+BaO | | 6.0 | 1.7 | 3.2 | 2.5 | 4.0 |
| Density (g/cm³) | | 2.43 | 2.42 | 2.43 | 2.43 | 2.42 |
| α(×10⁻⁷) | | 78 | 83 | 83 | 87 | 79 |
| Ps (°C) | | 573 | 556 | 572 | 564 | 550 |
| Ta (°C) | | 623 | 603 | 622 | 614 | 594 |
| Ts (°C) | | 871 | 836 | 867 | 865 | 819 |
| 10⁴ dPa·s (°C) | | 1260 | 1255 | 1268 | 1283 | 1235 |
| 10³ dPa·s (°C) | | 1460 | 1472 | 1475 | 1499 | 1456 |
| 10^{2.5} dPa·s (°C) | | 1587 | 1606 | 1603 | 1635 | 1595 |
| TL (°C) | | 1182 | 1003 | 920 | 1006 | 904 |
| log₁₀η_{TL} (dPa·s) | | 4.5 | 5.7 | 6.9 | 6.0 | 6.5 |
| Crack resistance (gf) | | unmeasured | unmeasured | unmeasured | unmeasured | unmeasured |
| CS (MPa) | | 900 | 940 | 1000 | 930 | 580 |
| DOL (µm) | | 40 | 40 | 40 | 50 | 30 |

Each of the samples shown in the tables was produced in the following manner. First, raw materials for glass were mixed together so as to result in the glass composition shown in the table, and the mixture was melted using a platinum pot at 1,550-1,750°C for 8 hours. Thereafter, the molten glass obtained was poured onto a carbon plate and formed into a plate. The glass plate obtained was evaluated for various properties.

The value of density was determined by the well known Archimedes method.

The value of the coefficient of thermal expansion α is given in terms of the average coefficient of thermal expansion measured in the temperature range of 30-380°C using a dilatometer.

The values of strain point Ps and annealing point Ta were measured on the basis of the method described in ASTM C336.

The value of softening point Ts was measured on the basis of the method described in ASTM C338.

The temperature values at high-temperature viscosities of 10^{4.0} dPa·s, 10^{3.0} dPa·s, and 10^{2.5} dPa·s were measured by the platinum ball pulling-up method.

The value of liquidus temperature TL was determined by placing in a platinum boat a glass powder which passed through a standard 30-mesh sieve (opening size, 500 µm) but remained on a 50-mesh sieve (opening size, 300 µm) and thereafter holding the platinum boat in a temperature-gradient furnace for 24 hours to measure the temperature at which crystal precipitation occurred.

The value of liquidus viscosity logη_{TL} was determined by measuring the viscosity of the glass at the liquidus temperature by the platinum ball pulling-up method.

Crack resistance means the load at which the percentage crack occurrence reaches 50%, and the percentage crack occurrence was determined in the following manner. First, in a thermo-hygrostatic chamber kept at a humidity of 30% and a temperature of 25°C, a Vickers indenter on which a given set load is being imposed is driven into the glass surface (surface polished to optical grade) for 15 seconds and, at 15 seconds thereafter, the number of cracks which have generated from the four corners of the indentation mark is counted (the maximum number for one indentation mark is 4). The indenter was thus driven 20 times to determine the total number of cracks generated. Thereafter, the percentage crack occurrence was determined using the formula [(total number of cracks generated)/80]×100.

As apparent from Tables 1 to 7, samples Nos. 1 to 34 and 36 to 40 each had a coefficient of thermal expansion of 69×10⁻⁷ to 92×10⁻⁷ /°C. Furthermore, these samples each had a liquidus viscosity of 10^{4.0} dPa·s or higher, and it is hence thought that these samples are capable of being formed into tubing by the Danner method and that a large quantity of glass tubes can be produced therefrom at low cost with high production efficiency.

Next, both surfaces of each sample were subjected to polishing to optical grade, and this sample was then immersed in 440°C KNO₃ molten salt (fresh KNO₃ molten salt) for 6 hours to thereby conduct an ion-exchange treatment (chemical strengthening). After the ion-exchange treatment, the surfaces of each sample were washed. Subsequently, the value of compression stress (CS) and thickness (DOL) of the compression stress layer in each surface were calculated from the number of interference fringes and from the spacing therebetween observed using a surface stress meter (FSM-6000, manufactured by Toshiba Corp.). For the calculation, the refractive index and optical elastic constant of each sample were taken as 1.51 and 30 [(nm/cm)/MPa], respectively. Incidentally, the glass composition in the surface layers of a glass differs microscopically between before and after a strengthening treatment, but the glass composition of the glass as a whole does not change substantially.

As apparent from Tables 1 to 7, in sample Nos. 1 to 34 and 36 to 40, which had undergone the ion-exchange treatment, the surface compression stress layers had a value of compression stress of 580 MPa or higher and a thickness of 30 µm or larger. These samples showed sufficient compression stress and a sufficient strengthening depth.

While the present invention has been described in detail and with reference to specific embodiments thereof, it will be apparent to one skilled in the art that various changes and modifications can be made therein without departing from the spirit and scope thereof.

This application is based on a Japanese patent application filed on July 18, 2012 (Application No. 2012-159192), the contents thereof being incorporated herein by reference.

### INDUSTRIAL APPLICABILITY

The glass for pharmaceutical containers of the present invention and the glass tube produced therefrom are suitable for use as materials for pharmaceutical containers such as ampoules, vials, pre-filled syringes, and cartridges. Although it is preferable that the glass for pharmaceutical containers of the present invention and the glass tube produced therefrom should be formed into pharmaceutical containers, thereafter strengthened, and then used, it is also possible to use the containers without strengthening.

## Claims

1. A glass for pharmaceutical containers which has a glass composition comprising, in terms of mol%, 50-80% of SiO₂, 5-30% of Al₂O₃, 0-2% of Li₂O, and 5-25% of Na₂O.

2. The glass for pharmaceutical containers according to claim 1, which has a glass composition comprising, in terms of mol%, 50-80% of SiO₂, 5-30% of Al₂O₃, 0-2% of Li₂O, 5-25% of Na₂O, 0-10% of MgO, and 0-10% of CaO.

3. The glass for pharmaceutical containers according to claim 1 or 2, which has a glass composition comprising, in terms of mol%, 50-80% of SiO₂, 5-30% of Al₂O₃, 0-2% of Li₂O, 5-25% of Na₂O, 0-10% of MgO, 0-10% of CaO, and 1-10% of B₂O₃.

4. The glass for pharmaceutical containers according to any one of claims 1 to 3, which, when subjected to an ion-exchange treatment in 440°C KNO₃ molten salt, forms a compression stress layer that has a value of compression stress of 300 MPa or higher and a thickness of 10 µm or larger.

5. The glass for pharmaceutical containers according to any one of claims 1 to 4, which has a liquidus viscosity of 10^{4.0} dPa·s or higher.

6. The glass for pharmaceutical containers according to any one of claims 1 to 5, which has a coefficient of thermal expansion of 100×10⁻⁷ /°C or less in the temperature range of 30-380°C.

7. A glass tube for pharmaceutical containers which is formed from the glass according to any one of claims 1 to 6.

8. The glass tube for pharmaceutical containers according to claim 7, which is formed by the Danner method.

9. The glass tube for pharmaceutical containers according to claim 7 or 8, which has an outer diameter of 5-50 mm and a thickness of 0.3-2 mm.

10. A method for producing a pharmaceutical container, the method comprising the following steps:
step a): a step in which the glass tube for pharmaceutical containers according to any one of claims 7 to 9 is processed into a pharmaceutical container having a desired shape;
step b): a step in which the pharmaceutical container obtained by processing in step a) is subjected to a strengthening treatment.

11. A pharmaceutical container produced by the production method according to claim 10.
